# EUROPEAN PATENT SPECIFICATION

(11) **EP 0 745 990 B1**
(45) Date of publication and mention of the grant of the patent: **23.06.1999**
(21) Application number: 96110666.3
(22) Date of filing: 15.04.1992
(51) Int. Cl.: G11B 15/665

(54) **Loading post driving device**
Antriebsvorrichtung für einen Ladestift
Dispositif d'entraînement pour un galet de chargement

(30) Priority: 16.04.1991 JP 8388791; 17.04.1991 JP 8506291; 17.04.1991 JP 8506491; 17.04.1991 JP 8507191
(43) Date of publication of application: 04.12.1996
(62) Divisional of application: 92303400.3
(73) Proprietor: MATSUSHITA ELECTRIC INDUSTRIAL CO., LTD., Kadoma-shi Osaka (JP)
(72) Inventor: Konishi, Akio, Hyogo (JP); Saito, Yoshiyuki, Katano-shi, Osaka (JP); Takeda, Shuzo, Hirakata-shi (JP); Yoshio, Hideaki, Moriguchi-shi (JP); Kurumatani, Hiroshi, Hyogo (JP)
(74) Representative: Sorrell, Terence Gordon

(56) References cited:
- EP-A- 0 478 278
- DE-A- 3 020 590
- DE-A- 3 636 681
- PATENT ABSTRACTS OF JAPAN, unexamined applications, P field, vol. 14, no. 64, February 6, 1990 THE PATENT OFFICE JAPANESE GOVERNMENT page 79 P 1002; & JP-A-01 286 166 (HITACHI)

## Description

The present invention relates to a loading post driving device for a magnetic recording/playback apparatus in which a magnetic tape is wound around a cylindrical rotary head cylinder, having a rotary head built therein, to record/playback a signal by the rotary head.

A loading post driving device according to the preamble of the present claim is disclosed in DE-A-3020590. The device draws a magnetic tape out from a tape cassette and winds the tape around a rotary head cylinder. A drive ring is arranged in a rotational manner to drive a first tape carrier shuttle along the periphery of the rotary head cylinder. One after another the other tape carrier shuttles are moved along the periphery of the rotary head cylinder. In such a manner the band is moved to cover a part of the rotary head cylinder outer periphery.

A problem encountered with this type of devices is that the tape is wound around the rotary head cylinder in one peripheral direction only, and to increase loading speed it would be useful to wind the tape in both direction at the same time.

Another loading post driving device, which is cited as prior art according to Article 54(3,4) EPC, is disclosed in EP-A-0 478 278. This prior art is described with reference to the figures 4-6, and for the purpose of describing the relevant parts of a tape cassette player, in which the loading post driving device according to the present invention may be used.

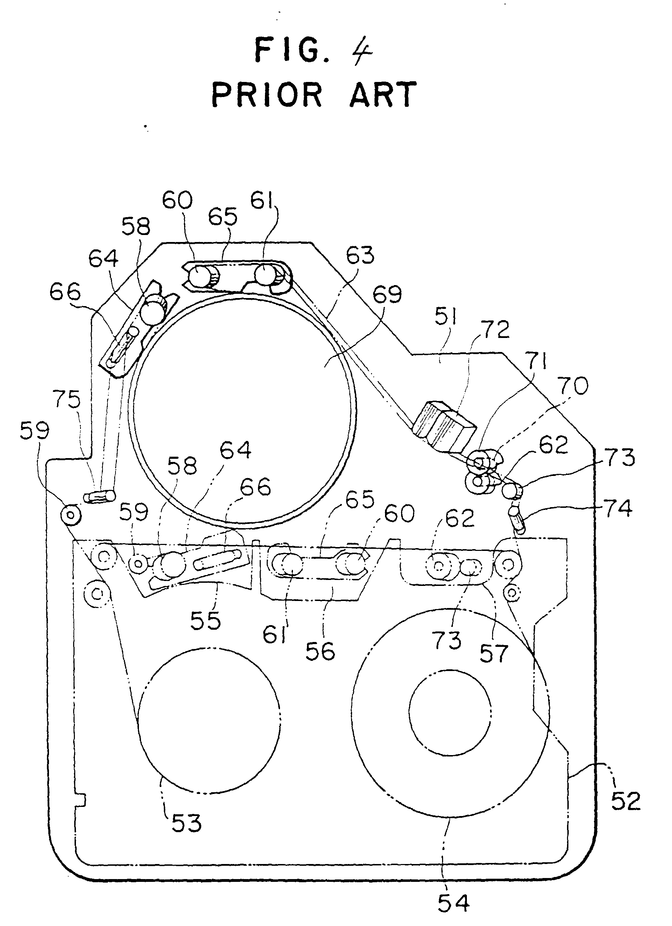

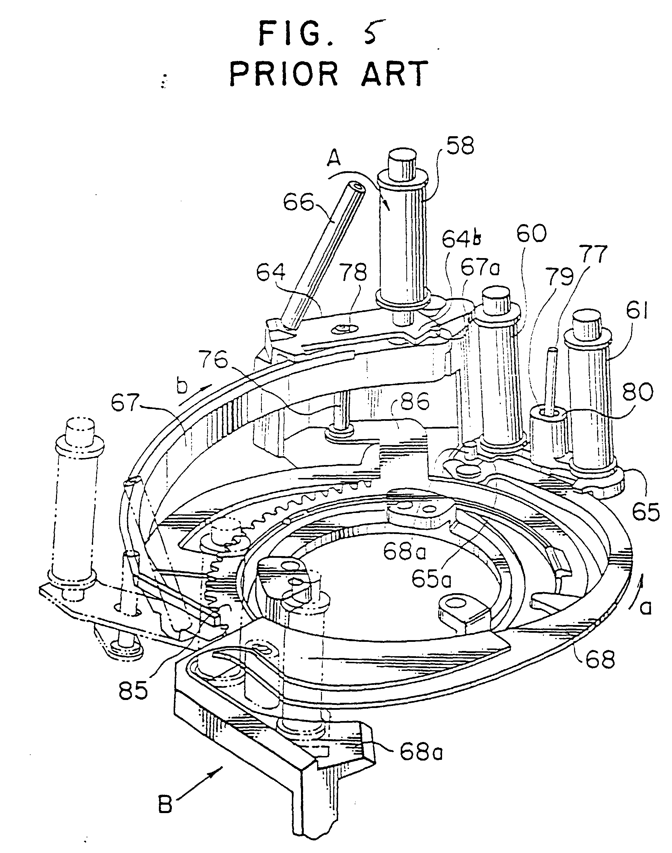

Fig. 4 is a schematic top plan view of the loading post driving device and Fig. 5 is a perspective view showing principal parts of the loading post driving device. Note that a rotary head cylinder 69 is omitted from Fig. 5 for brevity of the drawing and convenience of the description.

In Fig. 4, 51 denotes a chassis and 52 a tape cassette loaded on the chassis 51. A supply reel 53 and a take-up reel 54 are provided in the tape cassette 52. When the tape cassette 52 is loaded on the chassis 51, a supply side loading roller post 58 and a tension post 59; first and second take-up loading roller posts 60 and 61; and a pinch roller 62 are respectively positioned on the inside of a magnetic tape 63 in recesses 55, 56 and 57 formed in a front edge surface of the tape cassette 52. Denoted by 64 and 65 are a supply side movable carrier (tape carrier shuttle) and a take-up side movable carrier (tape carrier shuttle) on which the supply side loading roller post 58 and the first and second take-up side loading roller posts 60 and 61 are mounted, respectively. The supply side tape carrier shuttle 64 is also provided with an inclined post 66, in addition to the loading roller post 58, the inclined post 66 being positioned within the recess 55 together with the loading roller post 58. Denoted by 67 and 68 are a supply side arc shaped loading guide and take-up side arc shaped loading guide disposed along the circumference of a rotary head cylinder 69 as shown in Fig. 5, the guides 67 and 68 provided to respectively guide the supply side shuttle 64 and the take-up side tape carrier shuttle 65 during the operation of loading the magnetic tape 63. Also as shown in Fig. 5, the supply side loading guide 67 is arranged such that an end of the guide 67 along which the shuttle 64 returnably moves is raised higher than a proximal end of the guide 67 which is a home position of the shuttle 64. On the other hand, the take-up side loading guide 68 is arranged such that an end of the guide 68 along which the shuttle 65 returnably moves is lower than a proximal end of the guide 68 which is a home position of the shuttle 65.

The supply side shuttle 64 is driven by a supply side ring 85 having an arm 86 on a distal end portion of which a supply side drive shaft 76 is mounted. As will be seen from Fig. 5, the supply side movable tape carrier shuttle 64 is arranged to be vertically movable along the drive shaft 76 through a hole 78 in the shuttle 64. The rotary head cylinder 69 is attached substantially vertically with respect to the chassis 51. When the supply side shuttle 64 is moved along the supply side loading guide 67, the supply side loading roller post 58 withdraws the magnetic tape 63 from the supply reel 53 and winds it around the rotary head cylinder 69 in a direction extending obliquely upwardly along a left side surface area of the cylinder 69. When the take-up side tape carrier shuttle 65 is moved along the take-up side loading guide 68, the take-up side loading roller post 60 withdraws the magnetic tape 63 from the take-up reel 54 and winds it around the rotary head cylinder 69 in a direction extending obliquely downwardly along a right side surface area of the cylinder 69.

Denoted by 70 is a capstan provided on the chassis at a location outside where the tape cassette 52 is to be loaded, the capstan 70 being supported at its upper and lower ends by bearings 71 and attached to the chassis 51 such that it is inclined relative to the chassis at an angle substantially equal to those of the take-up side loading roller posts 60 and 61 at the tape terminal loading position. The inclined capstan 70 is brought into full contact with the magnetic tape 63 over its entire width, the tape running obliquely upwardly from the take-up side loading roller post 61 along a sloped path and being inclined forwardly. During completion of the tape loading operation, the capstan 70 is in press-contact with the pinch roller 62 which is moved from its position in the recess 57 of the tape cassette 52 so that the magnetic tape 63 is held between the capstan 70 and the pinch roller 62 to be driven thereby . Incidentally, the pinch roller 62 is arranged to have the same angle of inclination as that of the capstan 70 in order to be in full contact with the capstan 70 over the entire width of the tape. Denoted by 72 is an audio-control head provided at a location in the vicinity of the capstan 70 between the take-up side second loading roller post 61 when at the tape terminal loading position and the capstan 70. The audio-control head 72 is attached to the chassis 51 in such a manner that it is inclined at the same angle as that of the capstan 70 in order to facilitate contact between the audio-control head 72 and the magnetic tape 63 which is inclined forwardly and runs obliquely upwardly along a sloped path from the take-up side second loading roller post 61 to the capstan 70. Denoted by 73 is an auxiliary roller post which moves interlockingly with the pinch roller 62 such that it is positioned in the recess 57 of the tape cassette 52 before the start of the tape loading operation, and it moves together with the pinch roller 62 during the tape loading operation, thereby guiding the magnetic tape 63 running between the capstan 70 and the pinch roller 62 to a fixed inclined post 74. As regards the magnetic tape 63 fed from the take-up side second loading roller post 61 through the capstan 70 and the auxiliary roller post 73 whilst being in a forwardly-inclined posture, torsion of the magnetic tape 63 generated when the running path of the tape is converted from the sloped path into a horizontally running path is corrected by the inclined fixed post 74 which is slantingly attached to the chassis 51 before the magnetic tape 63 reaches the tape cassette 52, then the tape is wound around the take-up reel 54 of the tape cassette 52.

In the known loading post driving device of figures 4 and 5, means for turnably holding a loading ring to drive a loading post is generally arranged by providing shafts at several locations and holding the loading ring between a plurality of rollers mounted on each of the shafts.

Such an arrangement will be explained below with reference to the drawings.

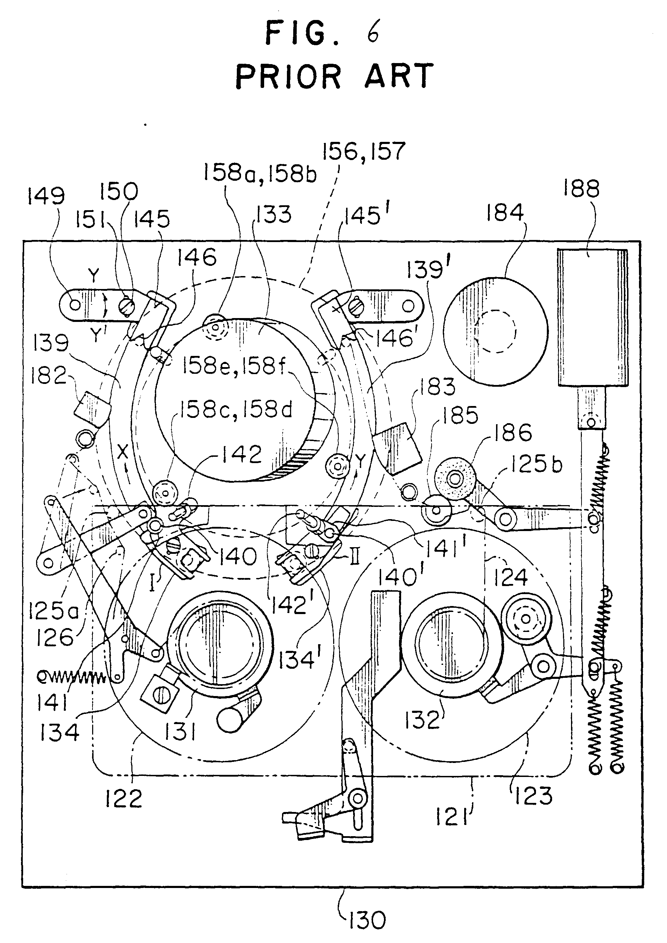

Fig. 6 shows a top plan view of a VTR body. Denoted by 121 is a cassette having a supply reel 122 and a take-up reel 123 both provided therein. Between the supply reel 122 and the take-up reel 123, a magnetic tape 124 is stretched through guide posts 125a, 125b and 126.

The cassette 121 rests on a base plate 130 at a predetermined position, the supply reel 122 in the cassette 121 is fitted over a supply reel stand 131, and further the take-up reel 123 is fitted over a take-up reel stand 132. 182 denotes an eraser head, 183 a control head, 184 a motor for a capstan and so forth, 185 a capstan, 186 an idler, and 188 a plunger. I and II denote a pair of magnetic tape withdrawer units for withdrawing the magnetic tape 124 out of the cassette 121 and winding it around the circumference of a rotary head cylinder 133 provided in an inclined position.

The description concerning an arrangement of the withdrawer unit I is given below.

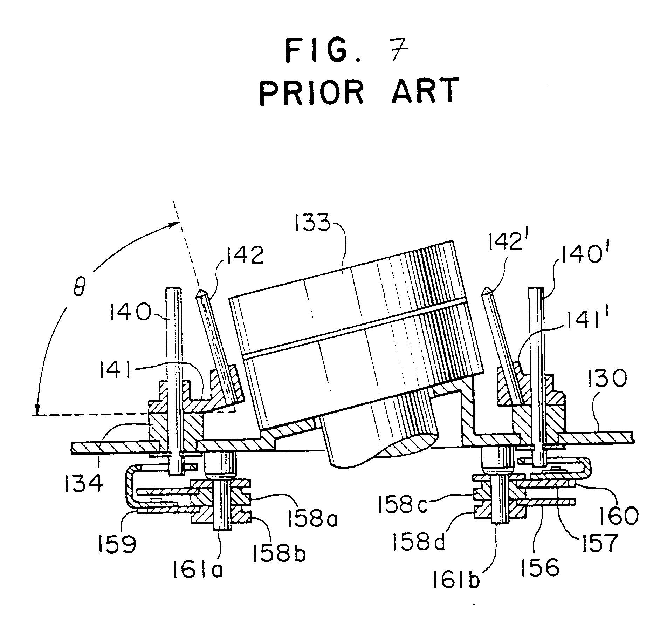

Fig. 7 is a cross-sectional view of the withdrawer unit I.

In Fig. 7, 133 denotes a rotary head cylinder around which the magnetic tape 124 is to be wound, and 156 and 157 are loading rings having gears 159 and 160 formed along the outer peripheral edges thereof and disposed on the underside of the base plate 130 one above the other in a concentric relationship. The loading rings 156 and 157 are held in place by three pairs of rollers 158 such as 158a, 158b; 158c, 158d; and 158e, 158f respectively fitted over roller pins or shafts 161a, 161b and 161c extending downwardly from the base plate 130 in such a manner as to be able to turn in directions opposite to each other. 140 denotes a loading post provided on a withdrawer unit base 134 which engages with the magnetic tape 124 to withdraw the magnetic tape 124 from the cassette 121 and, after completion of a tape withdrawing operation, to serve as one guide post for defining a running path of the magnetic tape. 141 denotes a correction post base on which a correction post 142 is mounted with an inclination of a predetermined angle θ.

Denoted by 139 is a guide slot for guiding sliding movement of the withdrawer unit which withdraws the magnetic tape 124 out of the cassette 121 and winds the same along the circumference of the rotary head cylinder 133 provided in an inclined position.

A stopper 145 is fixed onto the base plate 130 by a screw 150 with a shaft 149 serving as a guide. Since an attachment hole 151 has an elongated shape, the stopper 145 is turnable about the shaft 149 to some extent in directions of arrows Y - Y'.

The withdrawer unit II is symmetrical to the withdrawer unit I and thus will not be described herein.

The operation of the loading post driving device thus arranged will be explained below.

When a playback button (not shown) is pushed, a loading motor (not shown) starts rotating, whereupon a spur gear (not shown) is rotated through a worm gear (not shown) connected with a loading motor, thereby rotating the loading ring 156 held in mesh with the spur gear.

The withdrawer unit base 134 engaging with the loading ring 156 slides along the guide slot 139 in a direction of an arrow X, whereas a withdrawer unit base 134' slides along a guide slot 139' in a direction of an arrow Y. At this time, the magnetic tape 124 extends from the cassette 121 while remaining engaged with the loading posts 140 and 140' and the correction posts 142 and 142', and the loading posts 140 and 140' moving along the circumference of the rotary head cylinder 133 come into engagement with V-shaped grooves 146 and 146' which serve as stopper portions of the stoppers 145 and 145', respectively.

When the loading posts 140 and 140' abut against the V-shape grooves 146 and 146' of the respective stoppers the loading motor (not shown) stops its rotation and the loading posts 140 and 140' remain stopped there without returning backwards.

Then, a plunger 188 is actuated to make an idler 186 abut against a capstan 185 for running the magnetic tape 124.

Additionally, when a stop button (not shown) is pushed, the device comes to a unloading state where the loading posts 140 and 140' are returned to their original positions.

The means for holding the loading rings 156 and 157 in a turnable manner comprises roller pins at several locations. The loading rings are held one above the other by the rollers fitted over the roller pins serving as shafts. In view of the prior art according to DE-A-3 020 590 it is an object of the present invention is to provide a guide arrangement for loading rings in a loading post driving device which can reduce the number of parts used and improve the assembly efficiency.

In the light of the above object, the present invention provides a loading post driving device for drawing out a magnetic tape from a tape cassette and winding said tape around a rotary head cylinder having a rotary head built therein, comprising: a drive ring for transmitting driving force from a drive source to a tape carrier shuttle characterised in that it includes a further drive ring for transmitting driving force from said drive source to another tape carrier shuttle, each drive ring having a toothed region alonq its outer periphery and capable of being turned by said drive source, and a loading ring guide fabricated from a one-piece molding and provided with holders adapted to integrally hold said drive rings on said loading ring guide in a turntable manner.

With the loading post driving device thus arranged, the number of parts used is reduced, and the assembly efficiency is improved by providing holders on the loading ring guide so as to integrally hold the loading rings on the loading guide in a turnable manner.

The features of the present invention will be described with reference to the drawings, of which:-
Fig. 1 is an exploded perspective view of loading rings and a loading ring guide of a loading post driving device according to an embodiment of the invention;
Fig. 2 is a perspective view showing an arrangement of the loading ring guide and loading rings of the invention in an assembled form;
Fig. 3 is a cross-sectional view of the loading ring guide;
Fig. 4 is a schematic top plan view of a prior art magnetic recording/playback apparatus;
Fig. 5 is an enlarged perspective view showing principal parts of the prior art loading post driving device of Fig. 4;
Fig. 6 is a top plan view of another prior art magnetic recording/playback apparatus; and
Fig. 7 is a cross-sectional view of a withdrawer unit I in the apparatus of Fig. 6.

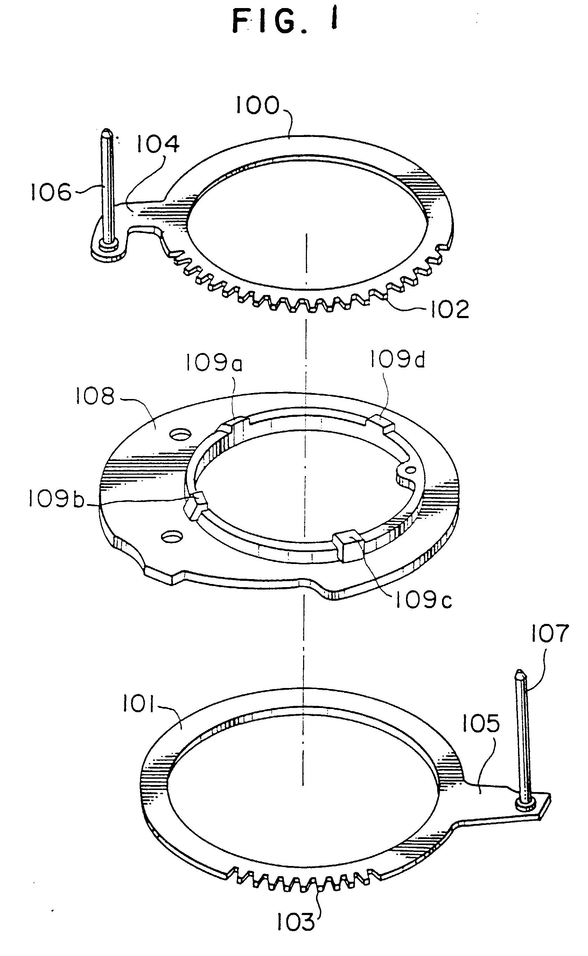

A loading post driving device according to the invention will be described with reference to Figs. 1 to 3.

Fig. 1 is a perspective view of loading rings and a loading ring guide of the loading post driving device.

In Fig. 1, 100 denotes a supply side loading ring which has a toothed region 102 along the outer peripheral edge thereof and a fixed arm 104, with a supply side drive shaft 106 mounted on a distal end of the fixed arm 104 and extending upwardly therefrom. 101 denotes a take-up side loading ring which has a diameter slightly larger than that of the supply side loading ring 100 and is arranged in a similar manner thereto. 108 denotes a loading ring guide which has a plurality of claws 109a, 109b, 109c and 109d arranged along an inner peripheral edge and is molded as one piece by using resin such as polyacetal.

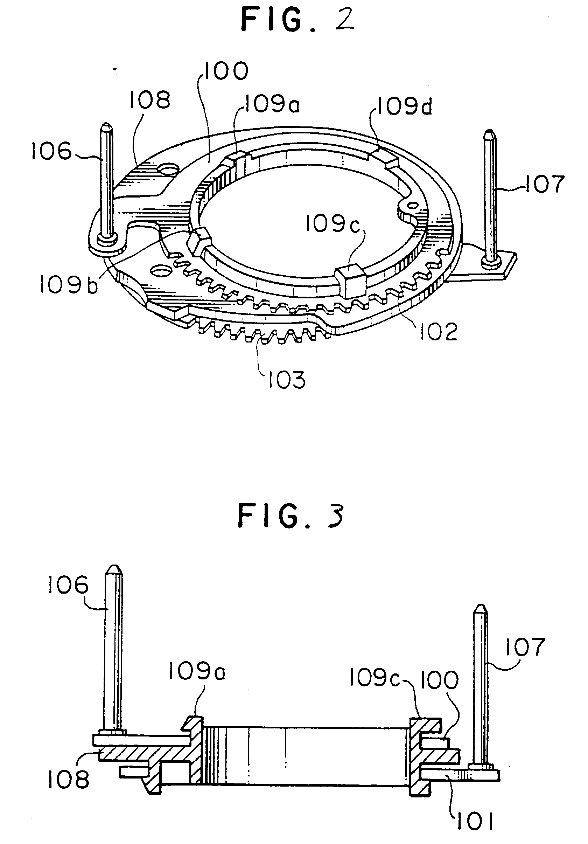

As show in Figs. 2 and 3, the loading rings 100 and 101 are fitted to the claws 109a, 109b, and 109c and 109d of the loading ring guide 108 so that the loading rings 100 and 101 are assembled with the loading ring guide 108 in a turnable manner.

Of the claws 109a, 109b, 109c and 109d of the loading ring guide 108, the claws 109a and 109b have tapered portions, whereas the claws 109c and 109d have no tapered portions and are formed to be somewhat larger than the claws 109a and 109b.

With such an arrangement, the loading ring 100 can be assembled with the loading ring guide 108 by the simple steps of first fitting the loading ring 100 to the claws 109c and 109d of the loading ring guide 108, and then pushing the loading ring 100 from above the tapered portions of the claws 109a and 109b. After assembly, the loading ring 100 will not disconnect from the loading ring guide 108 due to the presence of the claws 109a, 109b, 109c and 109d.

The loading ring 101 can be assembled in a similar manner to the loading ring 100.

As described above, according to the embodiment of the present invention, since a loading ring guide is fabricated as a one-piece molding and the loading ring guide is provided with holders adapted to assemble the loading rings and the loading ring guide in a turnable manner, the number of parts used can be reduced and the assembling efficiency can be improved.

## Claims

1. A loading post driving device for drawing out a magnetic tape from a tape cassette and winding said tape around a rotary head cylinder having a rotary head built therein, comprising: a drive ring (100) for transmitting driving force from a drive source to a tape carrier shuttle characterised in that it includes a further drive ring (101) for transmitting driving force from said drive source to another tape carrier shuttle, each drive ring (100,101) having a toothed region (102,103) along its outer periphery and capable of being turned by said drive source, and a loading ring guide (108) fabricated from a one-piece molding and provided with holders (109a,b,c,d) adapted to integrally hold said drive rings (100,101) on said loading ring guide (108) in a turntable manner.

## Patentansprüche

1. Antriebsvorrichtung für einen Ladestift zum Herausziehen eines Magnetbandes auf einer Bandkassette und zum Herumwickeln des Bandes um einen rotierenden Kopfzylinder, in den ein rotierender Kopf eingebaut ist, umfassend: einen Antriebsring (100) zum Übertragen einer Antriebskraft von einer Antriebsquelle zu einem Bandträgerschiffchen, **gekennzeichnet** durch einen weiteren Antriebsring (101) zum Übertragen einer Antriebskraft von der Antriebsquelle zu einem anderen Bandträgerschiffchen, wobei jeder Antriebsring (100, 101) an seinem Außenumfang einen gezahnten Bereich (102, 103) aufweist und von der besagten Antriebsquelle verdrehbar ist, und eine Laderingführung (108), die als einteiliges Gußstück ausgebildet und mit Haltern (109a, b, c, d) versehen ist, mit denen die Antriebsringe (100, 101) auf der Laderingführung (108) auf drehbare Weise einstückig gehalten werden können.

## Revendications

1. Dispositif d'entraînement de colonne de chargement pour tirer une bande magnétique d'une magnétocassette et enrouler ladite bande autour d'un cylindre à tête rotative ayant une tête rotative incorporée au même, comprenant: une couronne d'entraînement (100) pour transmettre une force d'entraînement à partir d'une source d'entraînement à une navette porte-bande, caractérisé en ce qu'iil inclut une autre couronne d'entraînement (101) pour transmettre une force d'entraînement de ladite source d'entraînement à une autre navette porte-bande, chaque couronne d'entraînement (100,101) ayant une région dentée (102,103) le long de sa périphérie extérieure et capable d'être tournée par ladite source d'entraînement, et un guide de couronne de chargement (108) fabriqué à partir d'une pièce moulée d'une seule pièce et pourvu de dispositifs de retenue (109a,b,c,d) adaptés pour maintenir intégralement lesdites couronnes d'entraînement (100,101) sur ledit guide de couronne de chargement (108) à la manière d'un plaque tournante.
